(19) **Europäisches Patentamt**
**European Patent Office**
**Office européen des brevets**

(11) **EP 2 695 319 B1**

(12) **EUROPEAN PATENT SPECIFICATION**

(45) Date of publication and mention
of the grant of the patent:
**28.10.2015 Bulletin 2015/44**

(51) Int Cl.:
*H04L 1/00* ^(2006.01)    *H04L 1/08* ^(2006.01)
*H04L 27/26* ^(2006.01)   *H04L 27/36* ^(2006.01)

(21) Application number: **12707800.4**

(22) Date of filing: **12.03.2012**

(86) International application number:
**PCT/EP2012/054232**

(87) International publication number:
**WO 2012/136444 (11.10.2012 Gazette 2012/41)**

(54) **APPARATUS AND METHOD FOR TRANSMITTING STATIC SIGNALING DATA IN A BROADCAST SYSTEM**

VORRICHTUNG UND VERFAHREN ZUR ÜBERTRAGUNG VON STATISCHEN
SIGNALISIERUNGSDATEN IN EINEM RUNDFUNKSYSTEM

APPAREIL ET PROCÉDÉ DE TRANSMISSION DE DONNÉES DE SIGNALISATION STATIQUES
DANS UN SYSTÈME DE RADIODIFFUSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.04.2011 EP 11161772**

(43) Date of publication of application:
**12.02.2014 Bulletin 2014/07**

(73) Proprietor: **Sony Corporation
Tokyo 108-0075 (JP)**

(72) Inventors:
• **ZOELLNER, Jan
38116 Braunschweig (DE)**

• **LOGHIN, Nabil Sven
70569 Stuttgart (DE)**
• **STADELMEIER, Lothar
70569 Stuttgart (DE)**
• **ROBERT, Joerg
48691 Vreden (DE)**

(74) Representative: **Witte, Weller & Partner
Patentanwälte mbB
Postfach 10 54 62
70047 Stuttgart (DE)**

(56) References cited:
**US-A1- 2010 085 985**

EP 2 695 319 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The present invention relates to a transmitting apparatus and a corresponding method for transmitting signals in a transmission system on the basis of a frame structure, the frames of said frame structure comprising signaling data and payload data. Further, the present invention relates to a signaling data modulation encoder and a corresponding modulation encoding method for use in such a transmitting apparatus and transmitting method, respectively. Even further, the present invention relates to a computer program and a computer readable non-transitory medium. Finally, the present invention relates to a transmission system.

BACKGROUND OF THE INVENTION

The signaling of DVB-T2 (Digital Video Broadcasting - T2, as described in ETSI EN 302 755 V1.1.1 (2009-09) "Digital Video Broadcasting (DVB); Frame structure channel coding and modulation for a second generation digital terrestrial television broadcasting system (DVB-T2)") contains many signaling fields which are static during the transmission. For instance, the contents of L1-pre and L1-config can only change per superframe, which typically consists of several T2 frames, or even do not change at all for quite a long time (e.g. several weeks or months).

This way of transmitting signaling data in a transmission system, in particular in a broadcasting system for mobile reception of broadcast transmissions, requires a certain amount of bandwidth and transmission power as well as reception power of receiving apparatus (e.g. mobile handheld devices) which contravenes the general requirements of such broadcast systems for mobile reception.

US2010/085985 A1 discloses apparatuses, computer media, and methods for supporting the broadcast of signaling data over a network. Signaling data is encoded, partitioned into M signaling segments, and distributed over M corresponding data frames. A data stream with the partitioned signaling data is transmitted through a digital terrestrial television broadcasting system, where the partitioned signaling data may include physical layer configurable data. The number of distributed signaling segments may be determined from a predetermined value or from a parameter contained in pre-signaling data. The number of physical layer pipes supported by signaling data may be increased by separating the static signaling part and the dynamic signaling part, dividing static signaling part into signaling segments, and interleaving the signaling segments over the data frames. The number of physical layer pipes can be further increased by adding at least one P2 symbol.

BRIEF SUMMARY OF THE INVENTION

It is an object of the present invention to provide a transmitting apparatus and a corresponding transmitting method which enable the transmitting apparatus to save transmission bandwidth and transmission power and which provide a sufficient robustness for reliable detection by receiving apparatus (e.g. mobile handheld devices).

It is a further object of the present invention to provide a signaling data modulation encoder and a corresponding modulation encoding method for use in such a transmitting apparatus and transmitting method, respectively. Further, it is an object of the present invention to provide a corresponding computer program for implementing said method, a computer readable non-transitory medium storing such a computer program and a transmission system.

According to an aspect of the present invention there is provided a transmitting apparatus for transmitting signals in a transmission system on the basis of a frame structure, the frames of said frame structure comprising signaling data and payload data, said transmitting apparatus comprising:

- a modulation encoder configured to separately modulate and encode said signaling data into signaling data patterns and said payload data into payload data patterns,

- a frame builder configured to map the signaling data patterns and payload data patterns onto the frames of said frame structure of a transmission signal, wherein said signaling data patterns are split into n signaling data portions, n being a positive integer, which n signaling data portions are mapped onto n or less frames, and

- a transmitter configured to transmit said transmission signal,

wherein said modulation encoder comprises a signaling data modulation encoder configured to modulate and encode said signaling data by
encoding said signaling data according to a predetermined code,
performing a correlation of the encoded signaling data with a correlation sequence, modulating said correlated signaling data into said signaling data patterns, and outputting said signaling data patterns.

According to a further aspect of the present invention there is provided a corresponding signaling data modulation encoder for use in a transmitting apparatus according to the present invention, said signaling data modulation encoder being configured to modulate and encode said signaling data, said signaling data modulation encoder comprising

   i) an encoding unit configured to encode said signaling data according to a predetermined code,

ii) a resorting unit provided on a first path of the encoded signaling data and configured to resort said encoded signaling data,

iii) a combining unit provided on the first path and configured to modulate a correlation sequence onto said resorted signaling data, and

iv) a modulation unit configured to modulate the encoded signaling data provided on a second path having a different phase than the first path and the output of the first path and to output said signaling data patterns.

According to still further aspects corresponding methods and a computer program comprising program means for causing a computer to carry out the steps of the signaling data modulation encoding method according to the present invention, when said computer program is carried out on a computer, as well as a computer readable non-transitory medium having instructions stored thereon which, when carried out on a computer, cause the computer to perform the steps of the signaling data modulation encoding method according to the present invention are provided.

Preferred embodiments of the invention are defined in the dependent claims. It shall be understood that the claimed signaling data modulation encoder, the claimed methods, the claimed computer program and the claimed computer readable medium have similar and/or identical preferred embodiments as the claimed transmitting apparatus and as defined in the dependent claims.

The present invention is based on the idea to split the signaling data patterns into smaller signaling portions in order to reduce the signaling overhead and to increase the robustness by means of additional time diversity. In other words, in each frame not the complete signaling data pattern is transmitted as is currently done in transmission system in accordance with DVT-T2, but less signaling data need to be transmitted in each data frame. The receiver collects the signaling data from several frames and appropriately combines them to obtain the complete signaling data pattern.

The number of signaling data portions into which a signaling pattern is split may be predetermined and fixed so that both the transmitting devices and the receiving devices know this number. However, it is also possible that this number is set individually, e.g. by the operator of the transmitting device (e.g. a broadcaster), or is determined on the fly, for instance to achieve a desired time diversity. In this case this number is either signaled from the transmitting device to the receiving devices or the receiving devices are provided with means for retrieving this number from the received signaling data itself or in any other way.

Generally, the n signaling data portions are mapped onto n different (preferably subsequent) frames. However it is also possible in an embodiment to map the n signaling data portions onto less than n different frames, e.g. to map two or more signaling data portion onto the same frame (at adjacent or separate positions of the same frame), or to map the n signaling data portions onto n different frames which are not arranged adjacent to each other.

To enable the receiving devices to determine this number it is proposed according to the present invention that the signaling data are linked with a correlation sequence. By use of the same correlation sequence in the receiving devices it is then possible to detect the number of signaling data portions and, generally, the position of a received signaling data portion in the complete signaling pattern, even if this information is not separately signaled or otherwise available to the receiving devices.

The transmitting apparatus according to the present invention can be used in a transmission system including one or more transmitting apparatus and one or more receiving apparatus. A receiving apparatus is preferably configured for receiving signals in such a transmission system, said signals being transmitted on the basis of a frame structure, the frames of said frame structure comprising signaling data and payload data, said receiving apparatus comprising:

- a receiver configured to receive a transmission signal,

- a frame demapper configured to demap signaling data blocks and payload data patterns from the frames of said frame structure of said received transmission signal, wherein a signaling data block is assumed to comprise a number of data corresponding to the number of a signaling data pattern, wherein said signaling data patterns are split into n signaling data portions, n being a positive integer, which n signaling portions are mapped onto n or less frames, and

- a demodulation decoder configured to separately demodulate and decode said signaling data blocks and payload data patterns to obtain signaling data and payload data, wherein said demodulation decoder comprises a signaling data demodulation decoder (24) configured to demodulate and decode said signaling data blocks by determining the number n from said signaling blocks by performing a correlation of the data included in one or more signaling data blocks with the correlation sequence, by which the signaling data have been correlated before transmission, and

decoding n signaling portions included in the signaling blocks from which n has been determined.

BRIEF DESCRIPTION OF THE DRAWINGS

These and other aspects of the present invention will be apparent from and explained in more detail below with reference to the embodiments described hereinafter. In the following drawings

Fig. 1   shows a schematic diagram of the general layout of a transmitting apparatus according to the present invention,

Fig. 2   shows diagrams illustrating the mapping of signaling data onto several frames as known and as proposed according to the present invention,

Fig. 3   shows a schematic diagram of a first embodiment of a signaling data modulation encoder according to the present invention,

Fig. 4   shows a schematic diagram of the general layout of a receiving apparatus according to the present invention,

Fig. 5   shows a schematic diagram of a first embodiment of a first part of a signaling data decoder according to the present invention,

Fig. 6   shows diagrams illustrating the detection of the signaling portions by use of the correlation,

Fig. 7   shows a schematic diagram of an embodiment of a second part of a signaling data decoder according to the present invention,

Fig. 8   illustrates how a receiving apparatus expects and receives the signaling data,

Fig. 9   shows a schematic diagram of a second embodiment of a signaling data modulation encoder according to the present invention,

Fig. 10   shows a diagram illustrating cyclic pre-shifting of the content of the signaling pattern,

Fig. 11   shows diagrams illustrating possible peak positions of the correlation peaks for different splittings of the signaling patterns with cyclic pre-shifting,

Fig. 12   shows diagrams illustrating the performance of the correlation,

Fig. 13   shows a schematic diagram of a second embodiment of a second part of a signaling data decoder according to the present invention,

Fig. 14   shows a diagram illustrating an embodiment of a frame structure for use with the invention,

Fig. 15   shows a diagram illustrating the structure of a frame as used in the frame structure illustrated in Fig. 14,

Fig. 16   shows a diagram illustrating the known mapping of signaling data onto frames as shown in Fig. 15,

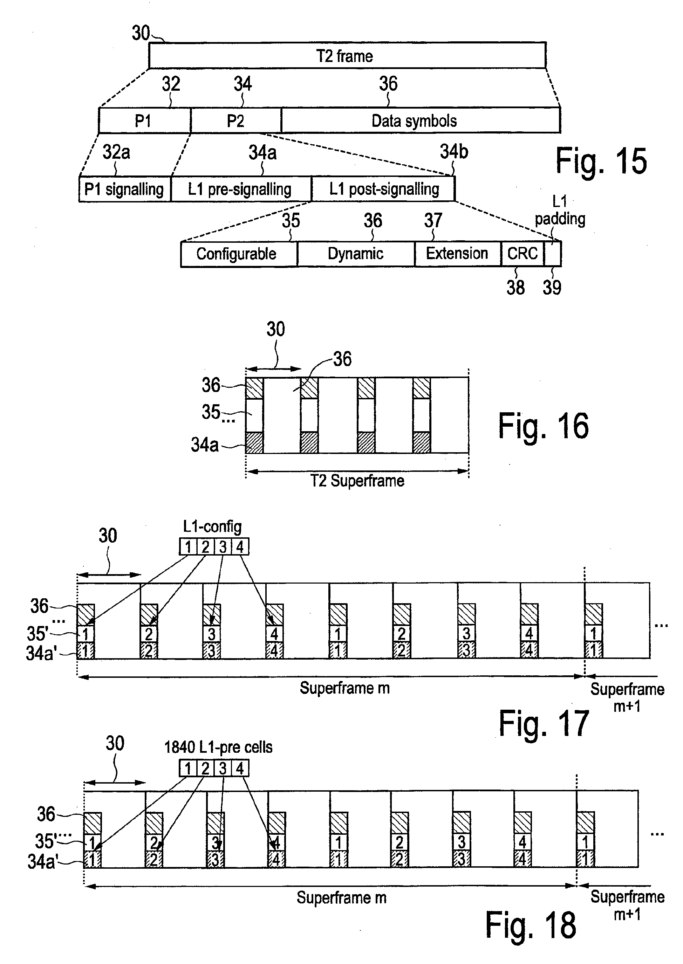

Fig, 17   shows a diagram illustrating a first embodiment of the mapping of signaling data onto frames as shown in Fig. 15, and

Fig. 18   shows a diagram illustrating a second embodiment of the mapping of signaling data onto frames as shown in Fig. 15.

DETAILED DESCRIPTION OF THE INVENTION

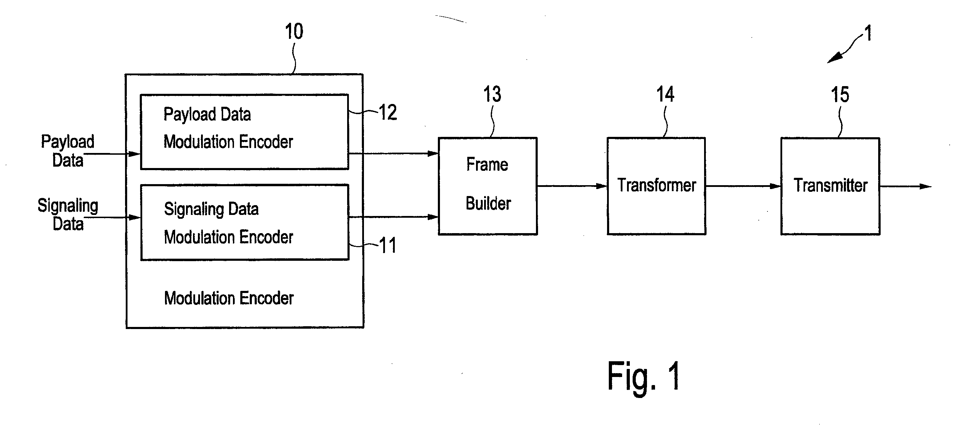

Fig. 1 shows a schematic diagram of the general layout of a transmitting apparatus 1 for transmitting signals in a transmission system on the basis of a frame structure, the frames of said frame structure comprising signaling data and payload data according to the present invention. The transmitting apparatus 1 essentially comprises a modulation encoder 10 configured to separately modulate and encode said signaling data into signaling data patterns (by a signaling data modulation encoder 11) and said payload data into payload data patterns (by a payload data modulation encoder 12). The transmitting apparatus 1 further comprises a frame builder 13 configured to map the signaling data patterns and payload data patterns onto the frames of said frame structure of a transmission signal, wherein said signaling data patterns are split into n signaling data portions, n being a positive integer, which n signaling portions are mapped onto n or less frames as will be explained below. The obtained transmission signal is then provided to a transmitter 15 for transmission. Optionally, a transformer 14 is provided for transforming the obtained transmission signal, i.e. said at least one signaling pattern and said one or more data patterns, from the frequency domain into the time domain to generate a time domain transmission signal, which is then provided to the transmitter 15 for transmitting said time domain transmission signal. The transmission signal can then be transmitted through the transmission system, e.g. a broadcast system for mobile reception of broadcast signals (e.g. TV or audio broadcasting or other broadcast services), for reception by one or more receiving apparatus.

It shall be noted here that the transmitting apparatus may comprise further elements, e.g. as provided in a transmitting apparatus according to the DVB-T2 standard (as shown in Fig. 1 of the DVB-T2 standard). Such elements may include an input processing unit, a BICM (Bit Interleaved Coding & Modulation) unit (including the modulation encoder 10) and an OFDM generator (including the transformer 14).

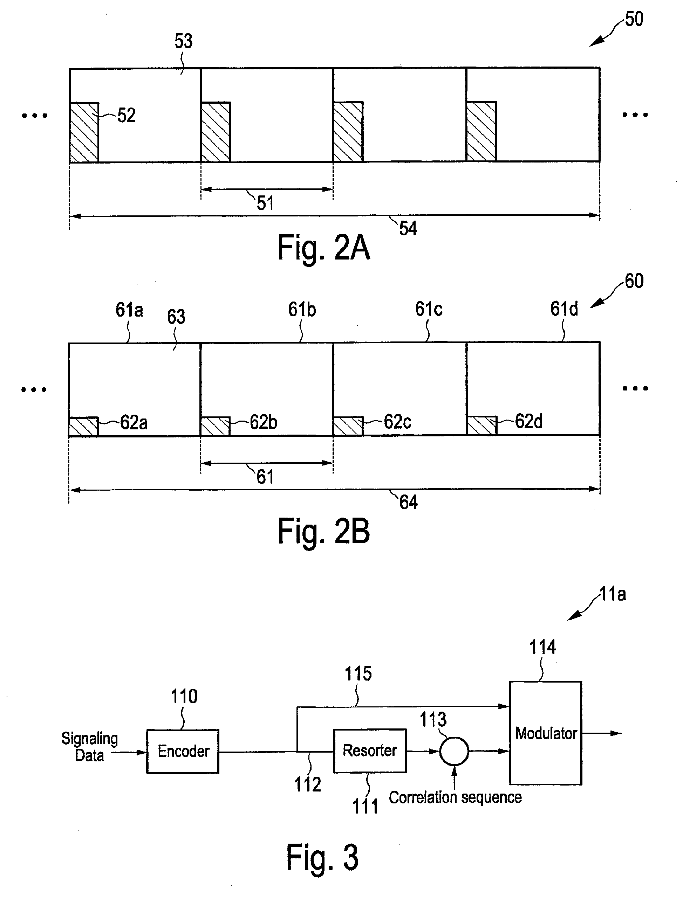

The mapping of signaling data onto several frames as known and as proposed according to the present invention shall be explained with reference to Fig. 2. Fig. 2A illustrates a frame structure 50 comprising subsequent frames 51, wherein all frames 51 comprise the same signaling data pattern 52, i.e. in each frame 51 the same signaling data pattern 52 is transmitted. The rest of each frame is available for mapping a payload data pattern 53, i.e. may carry actual payload, such as audio, video or other content data. In some frame structures, such as the frame structure in accordance with the DVB-T2 standard, a number of frames 51 (here four frames as a simple example) is seen as a set 54 (sometimes also called super-frame) of frames 51.

Fig. 2B illustrates a frame structure 60 as proposed according to the present invention. In this frame structure 60 each of a number of (preferably) subsequent frames 61, in particular each of the n (n=4 in this example) subsequent frames 61a, 61b, 61c, 61d forming a set 64 of frames, comprise only a signaling data portion 62a, 62b, 62c, 62d of a signaling data pattern. In other words, in each frame 61 the signaling data pattern (52 in Fig. 2A) which is conventionally mapped onto each frame, is split into n signaling data portions 62a, 62b, 62c, 62d, which are mapped onto the n subsequent frames 61a, 61b, 61c, 61d. This is particularly possible if (as is often the case) the signaling data are static (i.e. do not change often, e.g. in broadcast systems only change after weeks or even months).

Although this means that a receiving apparatus needs more time to receive all signaling data of a complete signaling data pattern, as is generally required, this saves transmission bandwidth since more space in each frame is available for mapping payload data patterns 64. Besides this increase of the efficiency of the transmission, a higher reliability of the reception is achieved due to the improved time diversity of the signaling data. These advantages are particularly important for mobile handheld receivers, e.g. as used in broadcast systems enabling mobile reception of broadcast services. In practical systems, a tradeoff will be made when selecting the number of n in order not to require too much time for the receiving apparatus for obtaining all signaling data portions for assembling a complete signaling data patterns (which would be the case for larger n) and to provide both a sufficient efficiency and time diversity.

Fig. 3 shows a schematic diagram of a first embodiment of a signaling data modulation encoder 11a according to the present invention for modulating and encoding the received signaling data. It comprises an encoding unit 110 configured to encode the received signaling data according to a predetermined code, e.g. a BCH code followed by an LDPC code. A resorting unit 111 is provided on a first path 112, e.g. a Q (quadrature) path of the encoded signaling data (also called the signaling data codewords), which is configured to resort said encoded signaling data. This resorting unit 111 may be a shifting unit for shifting the bits of the encoded signaling data, e.g. by one or two bits. A combining unit 113 is provided on said first path 112 which is configured to modulate a correlation sequence onto said resorted signaling data output from the resorting unit 111. This combining unit 113 may be an adder that adds modulo 2 or an XOR unit.

Finally, a modulation unit 114 is provided which is configured to modulate the output of the first path 112 and the output of a second path 115, e.g. an I (inphase) path of the encoded signaling data, said second path 115 having a different phase than the first path 112. I.e., the modulation unit 114 modulates the encoded signaling data provided on the second path 115 and the output of the combination unit 113. The modulation unit 114 may e.g. be a 16 QAM mapper or a QPSK mapper (or any other modulator that is appropriate or selected for the particular transmission system). The output of the modulation unit 114 represents the signaling data patterns which are subsequently mapped onto the frames 61 of the frame structure 60 as described above with respect to Fig. 2B.

It shall be noted that in other embodiments the signaling data modulation encoder comprises only some of the above mentioned elements, or the same elements in other constellations, or combinations with further elements.

Hence, according to an embodiment it is suggested to modulate the correlation sequence onto the signaling data. Further, it is suggested to feed the signaling data to an I and a Q path of the modulating unit 114 and to resort (i.e. to reorder) the data in the I or the Q path (for example by (cyclically) delaying it or by (cyclically) shifting it), while modulating the correlation sequence onto one of the paths. Hereby, more diversity of the signaling data is achieved which results in improved decoding properties on the receiving side. Preferably, a QPSK modulation is performed by the modulating unit 114 on the signaling data. A QPSK modulation is more robust than a 16 QAM modulation A QPSK symbol comprises 2 bits, whereby each symbol carries a part of a correlation sequence, which could for example be a PN sequence, a PRBS sequence or any other suitable sequence with good correlation properties.

In an embodiment, the encoding unit 110 is for example a concatenated BCH (Bose-Chaudhuri-Hocquenghem block code) and LDPC (Low Density Parity Check code) encoder which encodes the signaling data, which could for example be represented by 200 bits (for example the BCH/LDPC encoder could be a concatenated BCH/LDPC (200, 1840) encoder). The encoding unit 110 then outputs e.g. 1840 bits of encoded signaling data which are then fed to an I and a Q path of the modulating unit 114.

In the I path, the (e.g. 1840) encoded signaling bits are fed to the I path of the modulating unit 114 in unchanged form. However, in the Q path, the encoded signaling bits are resorted by any suitable resorting process, e.g. cyclically delayed (e.g. delayed by a one bit cyclic shift), shifted, reordered or the like, in a resorting unit 111. Thereafter, the correlation sequence (for example a PN sequence, a PRBS sequence any other suitable correlation sequence with good correlation properties) is modulated onto the resorted bits by means of a combining unit 113, which performs for example an XOR operation or any other suitable operation. The correlation sequence for example also comprises 1840 bits, so that in cases the resorting unit 111 introduces a one bit cyclic shift, each shifted bit of the Q path is modulated with one bit of the correlation sequence. The resorted bits with the modulated correlation sequence are then supplied on the Q path to the modulating unit 114, which performs e.g. a QPSK modulation on the signals supplied via the I and Q path.

The modulating unit 114 then outputs modulated signaling information in form of symbols (also called cells), in the present example 1840 symbols. Each symbol comprises a number of bits (in the QPSK example two bits), wherein, in the present example, one of the bits is modulated with one bit from the correlation sequence. Generally, a part of the correlation sequence is modulated onto one or more of the bits of each symbol. It has to be understood that instead of the Q path, the I path could be delayed and modulated with the correlation sequence. The modulated signaling data are then supplied from the modulating unit 114 to the frame builder 13 shown in Fig. 1 for mapping the signaling data onto the frames as explained above.

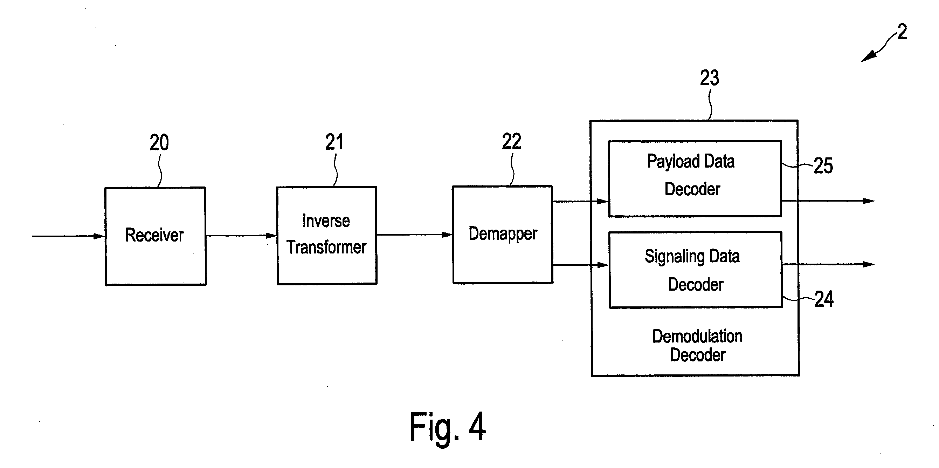

Fig. 4 shows a schematic diagram of the general layout of a receiving apparatus 2 according to the present invention. The receiving apparatus comprises a receiver 20 configured to receive a transmission signal. Optionally, an inverse transformer 21 is provided that is configured to transform said received time domain transmission signal from the time domain into the frequency domain to generate a frequency domain transmission signal. A frame demapper 22 is configured to demap signaling data blocks and payload data patterns from the frames of said frame structure of said transmission signal (e.g. the frequency domain transmission signal). Hereby, a signaling data block is assumed to comprise a number of data corresponding to the number of a signaling data pattern, wherein said signaling data patterns are split into n signaling data portions, n being a positive integer, which n signaling portions are mapped onto n or less frames. Thus, irrespective if the signaling data patterns are split into several portions or not, which the receiving apparatus does not yet know, the receiver initially assumes that the signaling data pattern is not split into several portions and takes a signaling data block whose length corresponds to the length of a signaling data pattern, and demaps said signaling data blocks from the frames of the frame structure.

The receiving apparatus further comprises a demodulation decoder 23 configured to separately demodulate and decode said signaling data blocks and payload data patterns to obtain signaling data and payload data, wherein said demodulation decoder 23 comprises a signaling data demodulation decoder 24 configured to demodulate and decode said signaling data blocks and a payload data demodulation decoder 25 configured to demodulate and decode the payload data from the frames. The demodulation and decoding of said signaling data blocks is performed by determining the number n from said signaling blocks by performing a correlation of the data included in one or more signaling data blocks with the correlation sequence, by which the signaling data have been correlated before transmission, and decoding n signaling portions included in the signaling blocks from which n has been determined. Preferably, the order of the n signaling data portions is also determined to enable the correct reconstruction of a signaling data pattern from the n signaling data portions.

It shall be noted here that the receiving apparatus may comprise further elements, e.g. as provided in a receiving apparatus according to the DVB-T2 standard. Such elements may include an input processing unit, a bit interleaved decoding & demodulation unit (including the demodulation decoder 23) and an OFDM demodulator (including the inverse transformer 21).

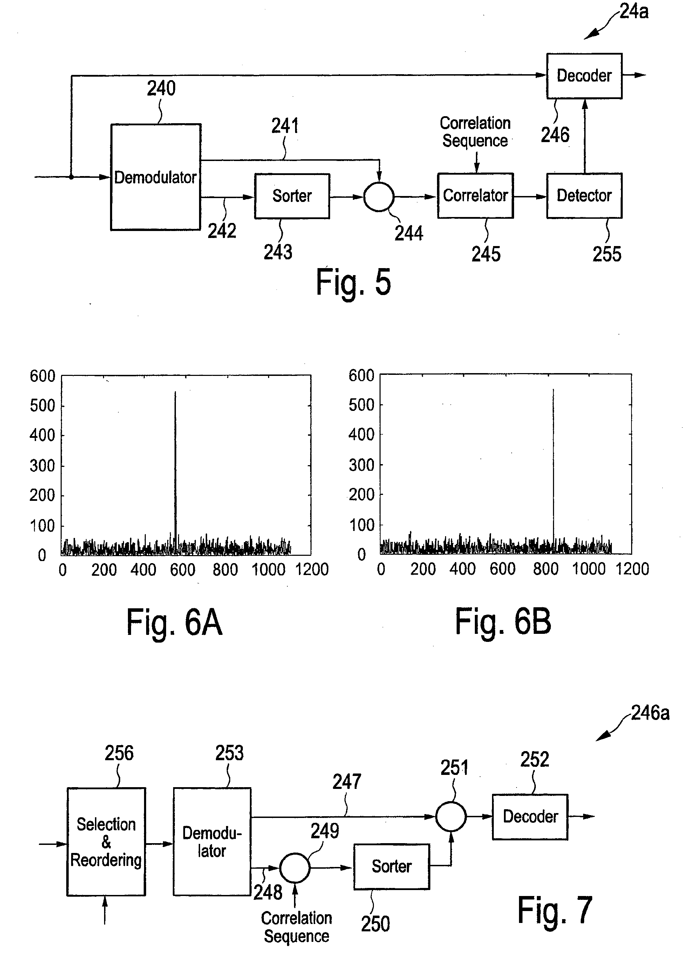

Fig. 5 shows a schematic diagram of a first embodiment of a first part of a signaling data decoder 24a according to the present invention. The signaling data decoder 24a comprises a demodulation unit 240 configured to demodulate encoded signaling data included in one or more signaling data blocks and to output the demodulated signaling data on a first path 242 (e.g. a Q path) and on a second path 241 (e.g. an I path) having a different phase than the first path. Further, the signaling data decoder 24a comprises a sorting unit 243 provided on the first path and configured to sort the demodulated signaling data, a combining unit 244 provided on the first path and configured to combine said demodulated signaling data of the second path with said resorted signaling data, a correlation unit 245 configured to correlate said combined signaling data with said correlation sequence, and a decoding unit 246 configured to decode said n signaling portions included in the signaling blocks from which n has been determined. Preferably, for detecting the value of n a separate detection unit 255 may be provided so that the decoding unit 246 receives both the input to the signaling data decoder 24a, i.e. encoded signaling data, and the output of the detection unit 255 providing information about the value of n.

In particular, Fig. 5 provides a suggestion for an implementation in order to obtain and evaluate the signaling data, e.g. contained in data frame headers, preambles or located at a predetermined position within a frame. Hereby, the received data stream is supplied to the demodulation unit 240, e.g. a demapping means, which is for example a soft decision (or hard decision) QPSK demapping means or a QAM demapping means, which demodulates the data and outputs them in an I and a Q path. Advantageously, the data are output in a log likelihood ratio form. In the Q path, the data are resorted (e.g. delayed, shifted or the like) in a sorting unit 243 in order to reverse the resorting introduced by the resorting unit 111 to the data in the Q path of the signaling data modulation encoder 11a shown in Fig. 3. Thereafter the data are modulated in the combining unit 244 with an expected copy (or suitably processed copy) of the correlation sequence comprised in the data frame headers (modulated onto the signaling data in the transmitting apparatus 1).

Preferably, the sorting performed by the sorting unit 243 should be fully reversible to the resorting introduced by the resorting 111. Also, the sorting unit 243 as well as the combining unit 244 should be located in the I path in case that the resorting unit 111 and the combining unit 113 are located in the I path.

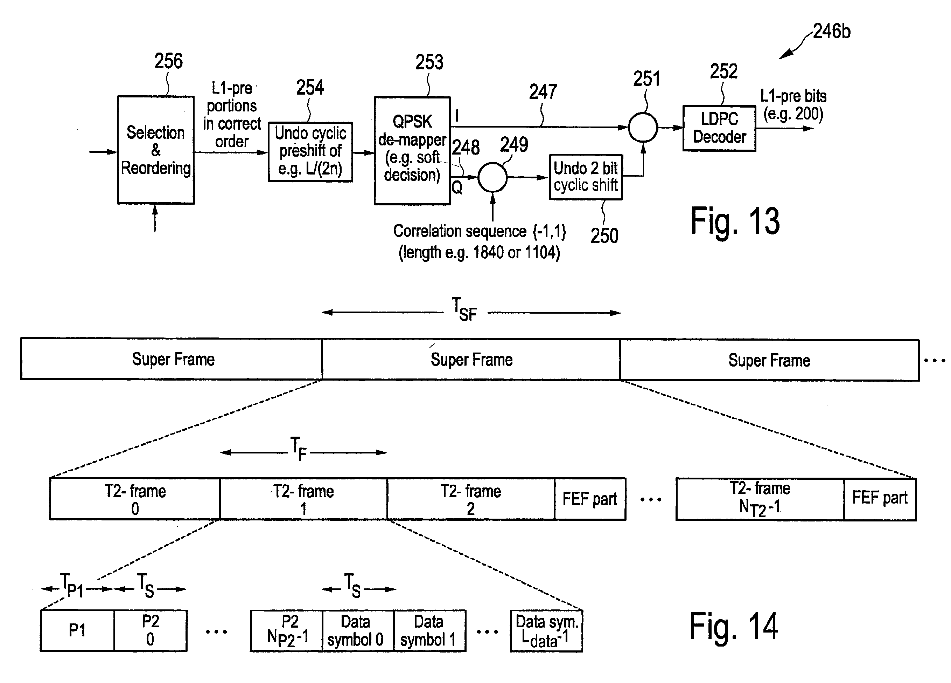

Afterwards (as will be explained below in more detail with reference to Figs. 7 and 13), the data of the I and the Q path are summed, whereafter decoding is performed to the added data in the decoder unit 252 (e.g. whereafter a hard decision is applied to the added data). The output is then decoded, for example by block code decoding which decodes the coding introduced by the encoding in the transmitting apparatus. The output of the decoding is then the original signaling data, as for example the 1840 bits signaling data as supplied to the encoding in the transmitting apparatus. These signaling data are then used for the further processing, for example supplied to the demapping means and/or error decoding means of the receiving apparatus. It should be noted that the I and the Q path could be decoded separately and the path with the better decoding result could be further used.

During the acquisition of the signaling data the receiver is first assuming $n=1$, performing a correlation with the known correlation sequence on the number of signaling data bits in a signaling data pattern (e.g. 1840) in the first received frame. If no correlation peak is detected the next higher value of n is assumed, waiting for the next frames to collect the required amount of signaling data portions. Then, the correlation is again performed as explained above with reference to Fig. 5. In contrast to the correlation solution of as provided e.g. in the DVB-C2 standard (DVB document A138, April 2009) the potential position in the framing structure is known, allowing for a complete reverse cyclic shift instead of a (e.g. two bit) delay, therefore avoiding the loss of the last (e.g. two) bits for the correlation.

If a peak is present for a given n, it is possible to determine the order of the signaling data portions with the aid of the peak position of the correlator output (if a cyclic convolution was used for correlation). This means that only a single correlation is required for each possible value of $n$. This is exemplarily shown in Fig. 6 showing diagrams illustrating the detection of the signaling portions by use of the correlation applied according to the present invention. In the diagram shown in Fig. 6A the peak occurs at an index of 552, which is two times the signaling data portion length for $n = 4$ and a signaling data pattern length of 1104. In the diagram shown in Fig. 6B the peak occurs at an index of 828, which is three times the signaling data portion length for $n = 4$ and a signaling data pattern length of 1104. Therefore the signaling data portions must be shifted by two for successful (e.g. LDPC) decoding. The reliability of the detection can easily be achieved by means of the amplitude of the peak in connection with a defined threshold. Furthermore, the peak must arise at a position which is a multiple of the signaling data portion length allowing for more sophisticated peak detection algorithms.

After successful detection of $n$ and, preferably (as will be explained below in a further embodiment), the correct order of signaling data portions, the content information of the signaling data portions is retrieved. For this purpose the signaling data decoder 24 (as shown in Fig. 4) comprises a second decoder part coupled to the first decoder part 24a (as shown in Fig. 5). An embodiment of second decoder part 246a is shown in Fig. 7. The output of the detection unit 255 and the input of the demodulation unit 240 are provided to selection and reordering unit 256. In said selection and reordering unit 256 the real signaling information is selected from the encoded signaling data, i.e. the detected number n of signaling data portions are taken (all other received data from the originally taken signaling data blocks is dismissed) and reordered in the correct sequence so that the original signaling data patterns are finally reconstructed. These reconstructed signaling data patterns are then provided to a decoder demodulation unit 253. In said decoder demodulation unit 253 a demodulation, e.g. a QPSK or 16 QAM demapping, is performed resulting in two paths 247, 248, e.g. an I path 247 and a Q path 248. For highest robustness, in a decoder decorrelation unit 249 the correlation sequence is removed by correlating the signal output of the decoder demodulation unit 253 on the first path 248 with the same correlation sequence that is used in the modulation encoder 11a. Subsequently, the reordering performed in the first path 112 in the modulation encoder 11a, in particular in the resorting unit 111 (shown in Fig. 3), is removed by an decoder sorting unit 250. Then, the output of the decoder demodulation unit 263 on the second path 247, which e.g. comprises the LLRs (Log Likelihood Ratios) of the I path, and the output of the decoder sorting unit 250, which e.g. comprises the LLRs of the Q path, are added in an decoder combining unit 251, e.g. an addition unit. Finally, in a signaling data decoding unit 252 decoding (e.g. LDPC decoding, followed by BCH decoding) of the corresponding bits output by the decoder combining unit 251 is performed. Due to the addition (e.g. LLR combining) the applied demodulation (e.g. QPSK demodulation) offers a higher robustness as a BPSK signal, as both output paths 247, 248 (e.g. I and Q paths) of the decoder demodulation unit 253 are carrying the actual signaling data and thus increase the diversity order.

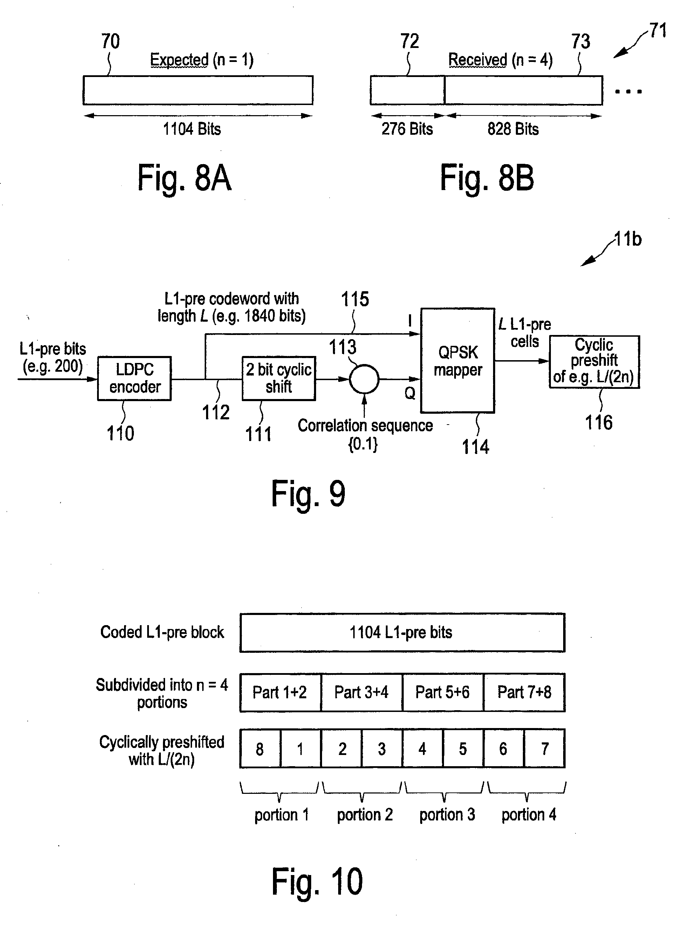

Referring to Fig. 6, even if $n = 1$ is assumed in the receiver, a peak could occur if a signaling data pattern is transmitted in several portions. This is shown in Fig. 8 exemplary for a signaling data pattern length L of 1104 bits. The receiver is expecting the transmission of all 1104 signaling data pattern bits 70 within one frame ($n=1$) (i.e. said it takes a signaling data block 70 of the size of a signaling data pattern) as shown in Fig. 8A. But even though the signaling data pattern 70 is split to four signaling data portions mapped onto four frames ($n = 4$), one fourth of the received sequence 71 (as shown in Fig. 8B comprising a signaling data portion 72 and a payload data portion 73) matches the correlation sequence, resulting in a peak with reduced amplitude at the receiver. Depending on the number of the signaling data portion this peak may occur at the same position as it would occur for $n = 1$. This means that the receiver is not able to detect the value of $n$ unambiguously with this approach.

A possible solution is the use of an individual correlation sequence for every value of $n$. However, this leads to some drawbacks, like the need for storing all these correlation sequences in the receiver. Furthermore, it is required to perform correlations with all used correlation sequences to determine the used value of n.

To overcome these drawbacks a cyclical preshift of the output of the modulation unit 114 (see Fig. 3), i.e. of the signaling data patterns depending on n is introduced. An embodiment of a corresponding signaling data modulation encoder 11b is shown in Fig. 9. This embodiment generally comprises the same elements as the signaling data modulation encoder 11b, but additionally comprises a preshifting unit 116. Furthermore, in Fig. 9 the embodiment is shown for a particular implementation in which the signaling data pattern is provided for including L1-pre bits as e.g. used in accordance with the DVB-T2 standard. However, the same embodiment may also be used in other implementations, and the preshifting unit 116 may simply be added to the embodiment of the signaling data modulation encoder 11a shown in Fig. 3.

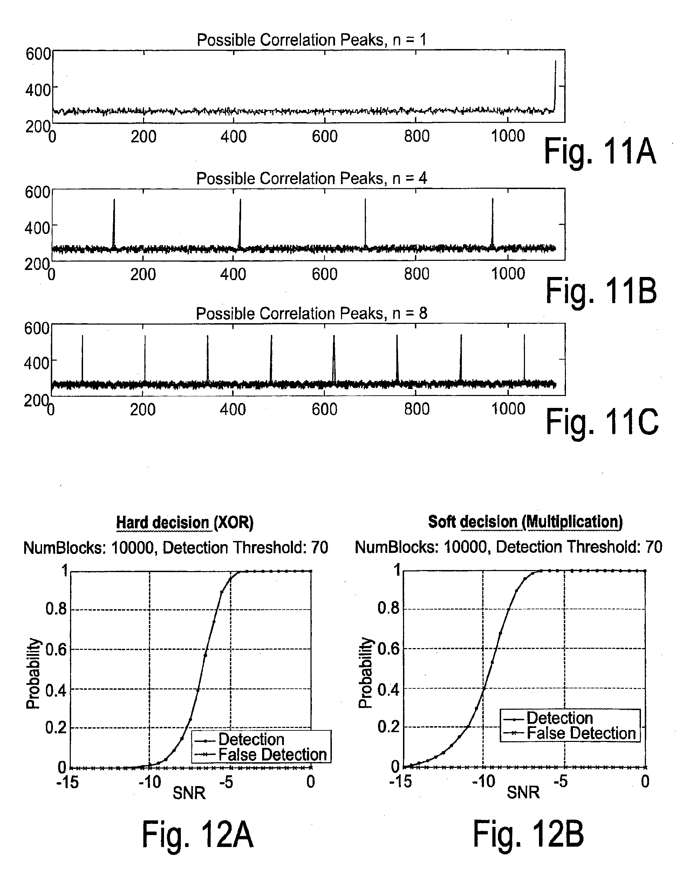

For $n = 1$ no preshifting is used in the preshifting unit 116, whereas for $n > 1$ a preshifting by $L/(2n)$ with the coded L1-pre length $L$ is introduced. For example with an L1-pre signaling length $L = 1104$ and $n = 4$, the contents of the L1-pre portions are cyclically shifted by $1104/8 = 138$ cells. The corresponding structure of the L1-pre block is shown in Fig. 10. This preshifting allows for the unambiguous detection of $n$ in the receiver with the aid of the peak position of the correlation. Fig. 11 depicts the possible peak positions for the former example with $n = 1$ (Fig. 11A), $n = 4$ (Fig. 11B), and $n = 8$ (Fig. 11C). This allows for the detection of $n$ in a single frame with only one correlation of length $L$. With the proposed shifting the $n$ possible peak positions can be calculated by

$$Peakpos(k) = k\frac{L}{n} + \frac{L}{2n}, k \in \{0,...,n-1\}$$

The second term which is not dependent on $k$ ensures the unique peak positions for any value of $k$ and $n$. However, the usage of different values for the cyclic shifting is also possible.

As L1-pre is the initial signaling stage which is accessed first in a frame a signaling of $n$ is not possible in case of a subdivision to multiple portions and "n-periodic" transmission (meaning the proposed concept of the splitting of the signaling data patterns into n signaling data portions). This means that the value of $n$ and the order of the $n$ L1-pre portions have to be determined during the acquisition stage. To ease this detection a reduced amount of values for $n$ can be defined for transmission, e.g. 1, 4 and 8. With increasing n an increase of the code rate of L1-pre is possible due to additional time diversity which reduces the protection overhead. Whereas L1-pre needs 1840 cells in T2 with code rate 1/5, code rate 1/3 is sufficient for n = 8 in typical mobile channels, reducing the amount of overall L1-pre cells to 1104.

However, to ease the detection of the used value of n, and furthermore allowing for the detection of the correct order of the proportion, L1-pre is linked with a correlation sequence with the length $L$ of the L1-pre signaling field. This is done as depicted in Fig. 9: The L1-pre signaling is transmitted in the I-axis of QPSK cells, but also in a modified form after correlation (XOR-connected) in the Q-axis allowing for a correlation in the receiver. A two bit cyclic shift allows for a decoupling of I and Q axis in the transmitter, decreasing the probability of an erasure of both I and Q axis after frequency-and time interleaving. However, any other reordering which is transparent to the receiver could be used instead of a bitshift, e.g. a bit interleaver.

For typical preamble lengths the correlation shows a very reliably detection performance. This is depicted in Fig. 12 for a correlation with soft decision LLR values of a QAM demapper (Fig. 12B) and hard decided bit values (Fig. 12A). Even with hard decision the correlation shows a detection probability of 100% at an SNR (Signal-to-Noise Ratio) of -4 dB in the AWGN (Additive White Gaussian Noise) channel. Furthermore, a robustness increase is possible by utilizing the knowledge of the allowed peak positions if a limitation to particular values of n is introduced.

Fig. 13 shows a second embodiment of a second part of a signaling data modulation decoder 246b according to the present invention. This embodiment is quite similar to the embodiment of the second part of the signaling data modulation decoder 246a shown in Fig. 7 but additionally comprises an unshifting unit 254. Furthermore, quite similar as mentioned above for Fig. 9, the embodiment is shown for a particular implementation in which the signaling data pattern is provided for including L1-pre bits as e.g. used in accordance with the DVB-T2 standard. However, the same embodiment may also be used in other implementations, and the unshifting unit 254 may simply be added to the embodiment of the signaling data modulation decoder 246a shown in Fig. 7. By this unshifting unit 254 the shifting introduced by the preshifting unit 116 (e.g. by L/2n) is removed again.

It shall be noted that in other embodiments the signaling data modulation decoders as shown in Figs. 5, 7 and 13 comprise only some of the above mentioned elements, or the same elements in other constellations, or combinations with further elements.

With respect to the selection of the correlation sequence it is to be mentioned that it is meaningful to select the correlation sequence according to the autocorrelation properties of the sequence. For long sequences the selection is not so critical, as the amplitude of the correlation peak (which is constant for a given correlation length) is clearly stronger than the noise floor of the correlation. Nevertheless, in principle sequences without long subsequences of zeros or ones show good correlation performance. These sequences can be generated by means of a linear feedback shift register (LFSR) with a polynomial with maximal-length (so called maximum length sequences). The length of the LFSR is selected according to the lowest number of states exceeding the required correlation length. For example for the generation of a correlation sequence with a length of 1840 bits the output of an LFSR with 11 bits and therefore $2^{11} - 1 = 2047$ states is used. Another advantage is that such a sequence can be generated in the receiver by means of an LFSR without the need to store it in a non-volatile memory.

Fig. 14 and 15 show a frame structure as used in broadcast systems in accordance with the DVB-T2 standard. In particular, according to DVB-T2, a superframe structure is applied where each superframe is subdivided into a multitude of T2 frames. After each predetermined number of consecutive T2 frames an FEF part (Future Extension Frame part) is inserted for future use. The present invention can generally be applied to the T2 frames, i.e. a signaling data pattern can be split into a number of signaling data portions corresponding to the number of T2 frames included in a superframe wherein each signaling data portion of a particular signaling data pattern is mapped onto one T2 frame of the superframe.

In another embodiment, the present invention uses the FEF parts (which may also be regarded as frames). For instance, a signaling data pattern can be split into a number of signaling data portions corresponding to the number of FEF parts included in a superframe wherein each signaling data portion of a particular signaling data pattern is mapped onto one or more FEF parts of the superframe.

In still another embodiment, the present invention uses frames across the borders of a superframe, e.g. a number of FEF parts of two or more subsequent superframes.

As shown in Fig. 15, the DVB-T2 frame 30 includes a P1 symbol 32 and a P2 symbol 34 as well as other OFDM symbols 36 for carrying data. The P1 symbol 32 includes P1 signalling data 32a whereas the P2 symbol 34 includes in two parts L1 signalling data which is provided in a L1-pre signal 34a and a L1-post signal 34b. The L1 post signalling data is shown to provide several data fields including configurable data 35 (L1-config), a dynamic field 36 (L1-dynamic), an extension field 37 and a cyclic redundancy check field 38 as well as padding symbols 39.

The signaling according to DVB-T2 contains many signaling fields which are static during the transmission. For instance, the contents of L1-pre 34a and L1-config 35 can only change per superframe, which typically consists of several T2 frames. Conventionally the signaling data are mapped onto the frames as shown in Fig. 16, i.e. the same signaling data are mapped onto all frames of a superframe, even if they are static.

However, it is possible to split these static signaling fields to n T2-frames to reduce the signaling overhead and to increase the robustness by means of additional time diversity. For example, the L1-config signaling 35' may be split to $n = 4$ T2-frames (as shown in Fig. 17) with each proportion having only one fourth of the length of the complete L1-config block. Similarly, as shown in Fig. 18, the L1-pre signaling 34a' may be split to n = 4 T2-frames with each proportion having only one fourth of the length of the complete L1-pre block.

The repetition rate n of L1-config (and/or L1-pre) can be signaled in the initial signaling stage L1-pre and does therefore not require further support for successful decoding, as the order of the proportions can be calculated from the frame number in the superframe. Hence a reconstruction of the complete L1-config field from the four L1-config portions can easily be achieved. However, the L1-dynamic field, which contains signaling data that may change every T2-frame, requires a transmission in every frame.

The invention has been illustrated and described in detail in the drawings and foregoing description, but such illustration and description are to be considered illustrative or exemplary and not restrictive. The invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

A computer program may be stored / distributed on a suitable non-transitory medium, such as an optical storage medium or a solid-state medium supplied together with or as part of other hardware, but may also be distributed in other forms, such as via the Internet or other wired or wireless telecommunication systems.

Any reference signs in the claims should not be construed as limiting the scope.

**Claims**

**1.** A transmitting apparatus for transmitting signals in a transmission system on the basis of a frame structure, the frames of said frame structure comprising signaling data and payload data, said transmitting apparatus comprising:

- a modulation encoder (10) configured to separately modulate and encode said signaling data into signaling data patterns and said payload data into payload data patterns,
- a frame builder (13) configured to map the signaling data patterns and payload data patterns onto the frames of said frame structure of a transmission signal, wherein said signaling data patterns are split into n signaling data portions, n being a positive integer, which n signaling data portions are mapped onto n or less frames, and
- a transmitter (15) configured to transmit said transmission signal,

wherein said modulation encoder (10) comprises a signaling data modulation encoder (11) configured to modulate and encode said signaling data by encoding said signaling data according to a predetermined code,

performing a correlation of the encoded signaling data with a correlation sequence, modulating said correlated signaling data into said signaling data patterns, and

outputting said signaling data patterns.

2. The transmitting apparatus as claimed in claim 1, wherein said signaling data modulation encoder (11) comprises

i) an encoding unit (110) configured to encode said signaling data according to said predetermined code,
ii) a resorting unit (111) provided on a first path of the encoded signaling data and configured to resort said encoded signaling data,
iii) a combining unit (113) provided on the first path and configured to modulate said correlation sequence onto said resorted signaling data, and
iv) a modulation unit (114) configured to modulate the encoded signaling data provided on a second path having a different phase than the first path and the output of the first path and to output said signaling data patterns.

3. The transmitting apparatus as claimed in claim 1 or 2, wherein said signaling data modulation encoder (11b) further comprises a shifting unit (116) configured to shift, in particular to cyclically shift, cells of said signaling data patterns by a shift factor.

4. The transmitting apparatus as claimed in claim 3, wherein said shifting unit (116) is configured to shift L cells of said signaling data patterns by a shift factor in the range between 0 and L/n or a multiple thereof, in particular by a shift factor of L/(2n) or an odd multiple thereof.

5. The transmitting apparatus as claimed in claim 2, wherein said resorting unit (111) is configured to shift the bits of the encoded signaling data received on the first path by a resorting factor.

6. The transmitting apparatus as claimed in claim 2, wherein said resorting unit (111) is configured to shift the bits of the encoded signaling data received on the first path by a resorting factor of m bits, m being a positive integer, in particular by a resorting factor of m=1 or m=2.

7. The transmitting apparatus as claimed in claim 2, wherein said combining unit (113) is configured to use a stored correlation sequence or a correlation sequence calculated based on a predetermined rule for modulation onto said resorted signaling data.

8. The transmitting apparatus as claimed in claim 2, wherein said combining unit (113) is configured to use a correlation sequence having the same or smaller length than said encoded and resorted signaling data on said first path.

9. The transmitting apparatus as claimed in any preceding claim,
wherein the signaling data include L1-pre signaling data and L1-post signaling data including L1-config signaling data, and wherein the frame builder is configured to split the encoded and modulated L1-pre signaling data into n L1-pre signaling data portions and/or to split the encoded and modulated L1-config signaling data into n L1-config signaling data portions.

10. The transmitting apparatus as claimed in any preceding claim,
wherein said frame builder (13) is configured to map said signaling data patterns and said payload data patterns onto the frames of a super-frame of the frame structure.

11. The transmitting apparatus as claimed in claim 2, wherein said first path is a quadrature phase path, Q-path, and wherein said second path is an inphase path, I-path.

12. A transmitting method for transmitting signals in a transmission system on the basis of a frame structure, the frames of said frame structure comprising signaling data and payload data, said transmitting method comprising the steps of:

- separately modulating and encoding said signaling data into signaling data patterns and said payload data into payload data patterns,
- mapping the signaling data patterns and payload data patterns onto the frames of said frame structure of a transmission signal, wherein said signaling data patterns are split into n signaling data portions, n being a positive integer, which n signaling data portions are mapped onto n or less frames, and
- transmitting said transmission signal,

wherein said step of separately modulating and encoding comprises a step of modulating and encoding said signaling data by
encoding said signaling data according to a predetermined code,
performing a correlation of the encoded signaling data with a correlation sequence, modulating said correlated signaling data said into signaling data patterns, and
outputting said signaling data patterns.

13. A signaling data modulation encoder (11) for use in a transmitting apparatus as claimed in claim 1, said signaling data modulation encoder (11) being configured to modulate and encode said signaling data and comprising

i) an encoding unit (110) configured to encode said signaling data according to a predetermined code,
ii) a resorting unit (111) provided on a first path of the encoded signaling data and configured to resort said encoded signaling data,
iii) a combining unit (113) provided on the first path and configured to modulate a correlation sequence onto said resorted signaling data, and
iv) a modulation unit (114) configured to modulate the encoded signaling data provided on a second path having a different phase than the first path and the output of the first path and to output said signaling data patterns.

14. A signaling data modulation method for use in a transmitting method as claimed in claim 12, said signaling data modulation method comprising a step of modulating and encoding said signaling data comprising the steps of

i) encoding said signaling data according to a predetermined code,
ii) resorting said encoded signaling data provided on a first path,
iii) modulating a correlation sequence onto said resorted signaling data provided on the first path,
iv) modulating the encoded signaling data provided on a second path having a different phase than the first path and the output of the first path and
v) outputting said signaling data patterns.

15. A computer program comprising program code means for causing a computer to perform the steps of said signaling data modulation method as claimed in claim 18 when said computer program is carried out on a computer.

**Patentansprüche**

1. Übertragungseinrichtung zum Übertragen von Signalen in einem Übertragungssystem auf der Basis einer Rahmenstruktur, wobei die Rahmen der Rahmenstruktur Signalisierungsdaten und Nutzlastdaten umfassen, wobei die Übertragungseinrichtung Folgendes umfasst:

- einen Modulationscodierer (10), der dazu ausgestaltet ist, die Signalisierungsdaten zu Signalisierungsdatenmustern und die Nutzlastdaten zu Nutzlastdatenmustern getrennt zu modulieren und zu codieren,
- einen Rahmenhersteller (13), der dazu ausgestaltet ist, die Signalisierungsdatenmuster und die Nutzlastdatenmuster auf den Rahmen der Rahmenstruktur eines Übertragungssignals abzubilden, wobei die Signalisierungsdatenmuster in n Signalisierungsdatenabschnitte aufgeteilt sind, wobei n eine positive Ganzzahl ist, wobei die n Signalisierungsdatenabschnitte auf n oder weniger Rahmen abgebildet werden, und
- einen Sender (15), der dazu ausgestaltet ist, das Übertragungssignal zu übertragen,

wobei der Modulationscodierer (10) einen Signalisierungsdaten-Modulationscodierer (11) umfasst, der dazu ausgestaltet ist, die Signalisierungsdaten zu modulieren und zu codieren, durch
Codieren der Signalisierungsdaten gemäß einem zuvor bestimmten Code,
Durchführen einer Korrelation der codierten Signalisierungsdaten mit einer Korrelationssequenz,
Modulieren der korrelierten Signalisierungsdaten zu den Signalisierungsdatenmustern, und
Ausgeben der Signalisierungsdatenmuster.

2. Übertragungseinrichtung nach Anspruch 1, wobei der Signalisierungsdaten-Modulationscodierer (11) Folgendes umfasst

i) eine Codierungseinheit (110), die dazu ausgestaltet ist, die Signalisierungsdaten gemäß dem zuvor bestimmten Code zu codieren,
ii) eine Neuordnungseinheit (111), die auf einem ersten Pfad der codierten Signalisierungsdaten zur Verfügung gestellt und die dazu ausgestaltet ist, die codierten Signalisierungsdaten neu zu ordnen,

iii) eine Kombinationseinheit (113), die auf dem ersten Pfad zur Verfügung gestellt und die dazu ausgestaltet ist, die Korrelationssequenz auf die neu geordneten Signalisierungsdaten zu modulieren, und

iv) eine Modulationseinheit (114), die dazu ausgestaltet ist, die codierten Signalisierungsdaten, die auf einem zweiten Pfad mit einer unterschiedlichen Phase als die des ersten Pfades zur Verfügung gestellt sind, und den Ausgang des ersten Pfades zu modulieren und die Signalisierungsdatenmuster auszugeben.

**3.** Übertragungseinrichtung nach Anspruch 1 oder 2, wobei der Signalisierungsdaten-Modulationscodierer (11b) des Weiteren eine Verschiebeeinheit (116) umfasst, die dazu ausgestaltet ist, Zellen der Signalisierungsdatenmuster um einen Verschiebefaktor zu verschieben, insbesondere zyklisch zu verschieben.

**4.** Übertragungseinrichtung nach Anspruch 3, wobei die Verschiebeeinheit (116) dazu ausgestaltet ist, L Zellen der Signalisierungsdatenmuster um einen Verschiebefaktor in dem Bereich zwischen 0 und L/n oder einem Vielfachen davon, insbesondere um einen Verschiebefaktor L/(2n) oder einem ungeraden Vielfachen davon, zu verschieben.

**5.** Übertragungseinrichtung nach Anspruch 2, wobei die Neuordnungseinheit (111) dazu ausgestaltet ist, die Bits der codierten Signalisierungsdaten, die auf dem ersten Pfad empfangen werden, um einen Neuordnungsfaktor zu verschieben.

**6.** Übertragungseinrichtung nach Anspruch 2, wobei die Neuordnungseinheit (111) dazu ausgestaltet ist, die Bits der codierten Signalisierungsdaten, die auf dem ersten Pfad empfangen werden, um einen Neuordnungsfaktor von m Bits, wobei m eine positive Ganzzahl ist, insbesondere um einen Neuordnungsfaktor von m = 1 oder m = 2, zu verschieben.

**7.** Übertragungseinrichtung nach Anspruch 2, wobei die Kombinationseinheit (113) dazu ausgestaltet ist, eine gespeicherte Korrelationssequenz oder eine Korrelationssequenz zu verwenden, die auf der Basis einer zuvor bestimmten Regel zur Modulation auf die neu geordneten Signalisierungsdaten berechnet wird.

**8.** Übertragungseinrichtung nach Anspruch 2, wobei die Kombinationseinheit (113) dazu ausgestaltet ist, eine Korrelationssequenz mit derselben oder einer geringeren Länge als die codierten und neu geordneten Signalisierungsdaten auf dem ersten Pfad zu verwenden.

**9.** Übertragungseinrichtung nach irgendeinem vorhergehenden Anspruch, wobei die Signalisierungsdaten L1-Vorsignalisierungsdaten und L1-Nachsignalisierungsdaten aufweisen, die L1-Konfigurationssignalisierungsdaten aufweisen, und wobei der Rahmenhersteller dazu ausgestaltet ist, die codierten und modulierten L1-Vorsignalisierungsdaten in n L1-Vorsignalisierungsdatenabschnitte aufzuteilen und/oder die codierten und modulierten L1-Konfigurationssignalisierungsdaten in n L1-Konfigurationssignalisierungsdatenabschnitte aufzuteilen.

**10.** Übertragungseinrichtung nach irgendeinem vorhergehenden Anspruch, wobei der Rahmenhersteller (13) dazu ausgestaltet ist, die Signalisierungsdatenmuster und die Nutzlastdatenmuster auf den Rahmen eines Superrahmens der Rahmenstruktur abzubilden.

**11.** Übertragungseinrichtung nach Anspruch 2, wobei der erste Pfad ein Quadraturphasenpfad, Q-Pfad, ist, und wobei der zweite Pfad ein phasengleicher Pfad, I-Pfad, ist.

**12.** Übertragungsverfahren zum Übertragen von Signalen in einem Übertragungssystem auf der Basis einer Rahmenstruktur, wobei die Rahmen der Rahmenstruktur Signalisierungsdaten und Nutzlastdaten umfassen, wobei das Übertragungsverfahren die folgenden Schritte umfasst:

- getrenntes Modulieren und Codieren der Signalisierungsdaten zu Signalisierungsdatenmustern und der Nutzlastdaten zu Nutzlastdatenmustern,

- Abbilden der Signalisierungsdatenmuster und der Nutzlastdatenmuster auf den Rahmen der Rahmenstruktur eines Übertragungssignals, wobei die Signalisierungsdatenmuster in n Signalisierungsdatenabschnitte aufgeteilt sind, wobei n eine positive Ganzzahl ist, wobei die n Signalisierungsdatenabschnitte auf n oder weniger Rahmen abgebildet werden, und

- Übertragen des Übertragungssignals,

wobei der Schritt des getrennten Modulierens und Codierens einen Schritt des Modulierens und Codierens der Signalisierungsdaten umfasst, durch Codieren der Signalisierungsdaten gemäß einem zuvor bestimmten Code, Durchführen einer Korrelation der codierten Signalisierungsdaten mit einer Korrelationssequenz, Modulieren der korrelierten Signalisierungsdaten zu den Signalisierungsdatenmustern, und Ausgeben der Signalisierungsdatenmuster.

**13.** Signalisierungsdaten-Modulationscodierer (11) zur Verwendung in einer Übertragungseinrichtung nach Anspruch 1, wobei der Signalisierungsdaten-Modulationscodierer (11) dazu ausgestaltet ist, die Signalisierungsdaten zu modulieren und zu codieren und Folgendes umfasst

> i) eine Codierungseinheit (110), die dazu ausgestaltet ist, die Signalisierungsdaten gemäß einem zuvor bestimmten Code zu codieren,
> ii) eine Neuordnungseinheit (111), die auf einem ersten Pfad der codierten Signalisierungsdaten zur Verfügung gestellt und die dazu ausgestaltet ist, die codierten Signalisierungsdaten neu zu ordnen,
> iii) eine Kombinationseinheit (113), die auf dem ersten Pfad zur Verfügung gestellt und die dazu ausgestaltet ist, eine Korrelationssequenz auf die neu geordneten Signalisierungsdaten zu modulieren, und
> iv) eine Modulationseinheit (114), die dazu ausgestaltet ist, die codierten Signalisierungsdaten, die auf einem zweiten Pfad mit einer unterschiedlichen Phase als die des ersten Pfades zur Verfügung gestellt sind, und den Ausgang des ersten Pfades zu modulieren und die Signalisierungsdatenmuster auszugeben.

**14.** Signalisierungsdaten-Modulationsverfahren zur Verwendung in einem Übertragungsverfahren nach Anspruch 12, wobei das Signalisierungsdaten-Modulationsverfahren einen Schritt des Modulierens und Codierens der Signalisierungsdaten umfasst, das die Folgenden Schritte umfasst

> i) Codieren der Signalisierungsdaten gemäß einem zuvor bestimmten Code,
> ii) Neuordnen der codierten Signalisierungsdaten, die auf einem ersten Pfad zur Verfügung gestellt sind,
> iii) Modulieren einer Korrelationssequenz auf die neu geordneten Signalisierungsdaten, die auf dem ersten Pfad zur Verfügung gestellt sind,
> iv) Modulieren der codierten Signalisierungsdaten, die auf einem zweiten Pfad mit einer unterschiedlichen Phase als die des ersten Pfades zur Verfügung gestellt sind, und des Ausgangs des ersten Pfades und
> v) Ausgeben der Signalisierungsdatenmuster.

**15.** Computerprogramm, umfassend Programmcodemittel zum Bewirken, dass ein Computer die Schritte des Signalisierungsdaten-Modulationsverfahrens nach Anspruch 14 durchführt, wenn das Computerprogramm auf einem Computer ausgeführt wird.

**Revendications**

**1.** Appareil de transmission destiné à transmettre des signaux dans un système de transmission en se basant sur une structure de trame, les trames de ladite structure de trame comprenant des données de signalisation et des données de charge utile, ledit appareil de transmission comprenant :

> - un codeur de modulation (10) configuré pour moduler et coder séparément lesdites données de signalisation en modèles de données de signalisation et lesdites données de charge utile en modèles de données de charge utile,
> - un générateur de trames (13) configuré pour mettre en correspondance les modèles de données de signalisation et les modèles de données de charge utile sur les trames de ladite structure de trame d'un signal de transmission, lesdits modèles de données de signalisation étant divisés en n portions de données de signalisation, n étant un nombre entier positif, lesquelles n portions de données sont mises en correspondance sur n trames ou moins, et
> - un émetteur (15) configuré pour émettre ledit signal de transmission,

ledit codeur de modulation (10) comprenant un codeur de modulation de données de signalisation (11) configuré pour moduler et coder lesdites données de signalisation en
codant lesdites données de signalisation conformément à un code prédéterminé,
effectuant une corrélation des données de signalisation codées avec une séquence de corrélation,
modulant lesdites données de signalisation corrélées en lesdits modèles de données de signalisation, et délivrant en sortie lesdits modèles de données de signalisation.

**2.** Appareil de transmission selon la revendication 1, dans lequel ledit codeur de modulation de données de signalisation (11) comprend

> i) une unité de codage (110) configurée pour coder lesdites données de signalisation conformément audit code prédéterminé,
> ii) une unité de retri (111) présente sur un premier chemin des données de signalisation codées et configurée pour retrier lesdites données de signalisation codées,
> iii) une unité de combinaison (113) présente sur le premier chemin et configurée pour moduler ladite séquence de corrélation sur lesdites données de signalisation retriées, et
> iv) une unité de modulation (114), configurée pour moduler les données de signalisation codées, présente sur un deuxième chemin ayant une phase différente de celle du premier chemin et de la sortie du premier chemin, et pour délivrer en sortie lesdits modèles de données de signalisation.

3. Appareil de transmission selon la revendication 1 ou 2,
dans lequel ledit codeur de modulation de données de signalisation (11b) comprend en outre une unité de décalage (116) configurée pour décaler, notamment pour décaler de manière cyclique, les cellules desdits modèles de données de signalisation d'un facteur de décalage.

4. Appareil de transmission selon la revendication 3, dans lequel ladite unité de décalage (116) est configurée pour décaler L cellules desdits modèles de données de signalisation d'un facteur de décalage dans la plage comprise entre 0 et L/n ou d'un multiple de celui-ci, notamment d'un facteur de décalage de L/(2n) ou d'un multiple impair de celui-ci.

5. Appareil de transmission selon la revendication 2, dans lequel ladite unité de retri (111) est configurée pour décaler les bits des données de signalisation codées reçues sur le premier chemin d'un facteur de retri.

6. Appareil de transmission selon la revendication 2, dans lequel ladite unité de retri (111) est configurée pour écaler les bits des données de signalisation codées reçues sur le premier chemin d'un facteur de retri de m bits, m étant un nombre entier positif, notamment d'un facteur de retri de m = 1 ou m = 2.

7. Appareil de transmission selon la revendication 2, dans lequel ladite unité de combinaison (113) est configurée pour utiliser une séquence de corrélation stockée ou une séquence de corrélation calculée en se basant sur une règle prédéterminée pour la modulation sur lesdites données de signalisation retriées.

8. Appareil de transmission selon la revendication 2, dans lequel ladite unité de combinaison (113) est configurée pour utiliser une séquence de corrélation ayant une longueur inférieure ou égale auxdites données de signalisation codées et retriées sur ledit premier chemin.

9. Appareil de transmission selon l'une quelconque des revendications précédentes,
dans lequel les données de signalisation comprennent des données de pré-signalisation L1 et des données de post-signalisation L1, y compris des données de signalisation de configuration L1, et dans lequel le générateur de trames est configuré pour diviser les données de pré-signalisation L1 codées et modulées en n portions de données de pré-signalisation L1 et/ou pour diviser les données de signalisation de configuration L1 codées et modulées en n portions de données de signalisation de configuration L1.

10. Appareil de transmission selon l'une quelconque des revendications précédentes,
dans lequel ledit générateur de trames (13) est configuré pour mettre en correspondance lesdits modèles de données de signalisation et lesdits modèles de données de charge utile sur les trames d'une supertrame de la structure de trame.

11. Appareil de transmission selon la revendication 2, dans lequel ledit premier chemin est un chemin de phase en quadrature, chemin Q, et dans lequel ledit deuxième chemin est un chemin en phase, chemin I.

12. Procédé de transmission destiné à transmettre des signaux dans un système de transmission en se basant sur une structure de trame, les trames de ladite structure de trame comprenant des données de signalisation et des données de charge utile, ledit procédé de transmission comprenant les étapes suivantes :

- modulation et codage séparés desdites données de signalisation en modèles de données de signalisation et desdites données de charge utile en modèles de données de charge utile,
- mise en correspondance des modèles de données de signalisation et des modèles de données de charge utile sur les trames de ladite structure de trame d'un signal de transmission, lesdits modèles de données de signalisation étant divisés en n portions de données de signalisation, n étant un nombre entier positif, lesquelles n portions de données sont mises en correspondance sur n trames ou moins, et
- émission dudit signal de transmission,

ladite étape de modulation et de codage séparés comprenant une étape de modulation et de codage desdites données de signalisation en
codant lesdites données de signalisation conformément à un code prédéterminé,
effectuant une corrélation des données de signalisation codées avec une séquence de corrélation,
modulant lesdites données de signalisation corrélées en lesdits modèles de données de signalisation,
et délivrant en sortie lesdits modèles de données de signalisation.

13. Codeur de modulation de données de signalisation (11) destiné à être utilisé dans un appareil de transmission selon la revendication 1, ledit codeur de modulation de données de signalisation (11) étant configuré pour moduler et coder lesdites données de signalisation et comprenant

i) une unité de codage (110) configurée pour coder lesdites données de signalisation conformément à un code prédéterminé,

ii) une unité de retri (111) présente sur un premier chemin des données de signalisation codées et configurée pour retrier lesdites données de signalisation codées,

iii) une unité de combinaison (113) présente sur le premier chemin et configurée pour moduler une séquence de corrélation sur lesdites données de signalisation retriées, et

iv) une unité de modulation (114), configurée pour moduler les données de signalisation codées, présente sur un deuxième chemin ayant une phase différente de celle du premier chemin et de la sortie du premier chemin, et pour délivrer en sortie lesdits modèles de données de signalisation.

14. Procédé de modulation de données de signalisation destiné à être utilisé dans un procédé de transmission selon la revendication 12, ledit procédé de modulation de données de signalisation comprenant une étape de modulation et de codage desdites données de signalisation comprenant les étapes suivantes

i) codage desdites données de signalisation conformément à un code prédéterminé,

ii) retri desdites données de signalisation codées présentes sur un premier chemin,

iii) modulation d'une séquence de corrélation sur lesdites données de signalisation retriées présentes sur le premier chemin,

iv) modulation des données de signalisation codées présentes sur un deuxième chemin ayant une phase différente de celle du premier chemin et de la sortie du premier chemin, et

v) délivrance en sortie desdits modèles de données de signalisation.

15. Programme informatique comprenant des moyens de code de programme destinés à amener un ordinateur à mettre en oeuvre les étapes dudit procédé de modulation de données de signalisation selon la revendication 14 lorsque ledit programme informatique est exécuté sur un ordinateur.

Fig. 1

Fig. 2A

Fig. 2B

Fig. 3

Fig. 4

Fig. 5

Fig. 6A

Fig. 6B

Fig. 7

70    Expected (n = 1)

1104 Bits

## Fig. 8A

72    Received (n = 4)    73    71

276 Bits    828 Bits

## Fig. 8B

11b

L1-pre codeword with
length L (e.g. 1840 bits)    115

L1-pre bits
(e.g. 200)    →    LDPC
encoder    →    I    QPSK
mapper    →    L L1-pre
cells    →    Cyclic
preshift
of e.g. L/(2n)

113

2 bit cyclic
shift    →    Q

112    111    Correlation sequence
{0.1}

110    114    116

## Fig. 9

| Coded L1-pre block | 1104 L1-pre bits | | | |
|---|---|---|---|---|
| Subdivided into n = 4 portions | Part 1+2 | Part 3+4 | Part 5+6 | Part 7+8 |

| Cyclically preshifted with L/(2n) | 8 | 1 | 2 | 3 | 4 | 5 | 6 | 7 |
|---|---|---|---|---|---|---|---|---|

portion 1    portion 2    portion 3    portion 4

## Fig. 10

Possible Correlation Peaks, n = 1

Fig. 11A

Possible Correlation Peaks, n = 4

Fig. 11B

Possible Correlation Peaks, n = 8

Fig. 11C

Hard decision (XOR)

NumBlocks: 10000, Detection Threshold: 70

Detection
False Detection

SNR

Fig. 12A

Soft decision (Multiplication)

NumBlocks: 10000, Detection Threshold: 70

Detection
False Detection

SNR

Fig. 12B

EP 2 695 319 B1

246b

Fig. 13

Fig. 14

Fig. 15

Fig. 16

Fig. 17

Fig. 18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010085985 A1

**Non-patent literature cited in the description**

- Digital Video Broadcasting (DVB); Frame structure channel coding and modulation for a second generation digital terrestrial television broadcasting system (DVB-T2). *ETSI EN 302 755 V1.1.1,* September 2009